Europäisches Patentamt

European Patent Office

Office européen des brevets

(19)

(11) Veröffentlichungsnummer: **0 037 084**

**A1**

(12) # EUROPÄISCHE PATENTANMELDUNG

(21) Anmeldenummer: 81102289.6

(22) Anmeldetag: 26.03.81

(51) Int. Cl.³: **C 03 B 5/235**

(30) Priorität: 28.03.80 DE 3012074

(43) Veröffentlichungstag der Anmeldung:
07.10.81 Patentblatt 81/40

(84) Benannte Vertragsstaaten:
AT BE CH FR GB IT LI LU NL SE

(71) Anmelder: HERMANN HEYE
Allee
D-3063 Obernkirchen(DE)

(72) Erfinder: Novotny, Rudolf, Dr.
Am Rittersberg 14
D-4000 Düsseldorf 13(DE)

(72) Erfinder: von Laufenberg, Jürgen, Dr.
Scheidemannstrasse 5
D-5657 Haan/Rhld.(DE)

(72) Erfinder: Krings, Heinrich, Dipl.-Ing.
Adolf-Menzel-Strasse 8
D-4006 Erkrath(DE)

(74) Vertreter: Kosel, Peter, Dipl.-Ing. Patentanwälte et al,
Dipl.-Ing. Horst Röse Dipl.-Ing. Peter Kosel Postfach 129
Hohenhöfen 5
D-3353 Bad Gandersheim(DE)

(54) Verfahren zur Herstellung von Silikatglas.

(57) Bei einem Verfahren zur Herstellung von Silikatglas aus Siliziumdioxid und geeigneten Metallverbindungen im Schmelzprozeß mit thermischer Vorbehandlung des Gemenges wird eine der Hauptkomponenten des Gemenges unter Ausnutzung der in den Prozeßabgasen enthaltenen Wärmeenergie und/oder durch Zuführung prozeßfremder Wärmeenergie Zuferhitzt, diese Hauptkomponente mit den übrigen Komponenten homogen vermischt und sodann das erhitzte Gemenge dem Schmelzprozeß zugeführt. Diese Hauptkomponente kann dabei bis zu einer Temperatur erhitzt werden, die zu einer Mischtemperatur des erhitzten Gemenges führt, die unterhalb der Schmelztemperatur der Alkalimetall- und Erdalkalimetall-Komponente liegt. Die erhitzte Hauptkomponente ist z. B. der Sand. Wird Wärmeenergie aus Prozeßabgasen gewonnen, so können die Abgase zuvor durch Wärmeaustauscher geleitet werden.

EP 0 037 084 A1

Croydon Printing Company Ltd.

Unsere Akten-Nr.: 954/153EP    Bad Gandersheim, 25. März 1981
1 HERMANN HEYE

Verfahren zur Herstellung von Silikatglas

Die Erfindung betrifft ein verbessertes Verfahren zur Herstellung von Silikatglas aus Siliciumdioxid und geeigneten Metallverbindungen im Schmelzprozeß, bei dem das Komponenten-Gemenge zuvor einer thermischen Aufbereitung unterworfen wird.

Die Herstellung von Silikatglas - gemeinhin auch als Glas bezeichnet - erfolgt im technischen Maßstab in der Regel durch Zusammenschmelzen von Siliciumdioxid, beispielsweise in Form von Sand oder Quarzmehl, mit geeigneten Alkalimetall-, Erdalkalimetall- und anderen Metallverbindungen, zum Beispiel Verbindungen des Na, K, Ca, Mg, Al, Ba, Zn oder Pb, in hierfür geeigneten Öfen bei Temperaturen im Bereich von 1200 bis 1600°C. Geeignete Rohstoffe zur Glasherstellung sind neben reinem Quarzsand beispielsweise Soda, Kalkstein- oder Marmormehl, Feldspat, Mergel, Dolomit, Borax sowie gegebenenfalls - je nach der Art des herzustellenden Glases - noch weitere Zusätze. Die zerkleinerten Rohstoffe werden zu einem möglichst homogenen Komponenten-Gemenge verarbeitet, das gewünschtenfalls noch brikettiert, granuliert, pelletisiert oder gesintert werden kann, um einer Entmischung des Gemenges vorzubeugen. Außer diesem Rohstoff-Gemenge kann ein gewisser Anteil zerkleinerter Glasscherben in den Schmelzofen eingebracht werden.

/2

Aufgrund der verfahrensbedingt relativ hohen Temperaturen erfordert ein solcher Schmelzprozeß einen entsprechend hohen Energiebedarf und mithin einen gleichfalls hohen Kostenaufwand. Die Beheizung eines Schmelzofens erfolgt in technisch gebräuchlicher Weise mit Hilfe von Brennern, in denen zum Beispiel schweres Heizöl oder Erdgas in offener Flamme verbrannt und so die zum Zusammenschmelzen der Rohstoff-Komponenten notwendige Wärmeenergie erzeugt wird. Im Hinblick auf die Rückgewinnung der mit den heißen Prozeßabgasen abgeführten Energie werden diese Abgase in der Regel durch Wärmeaustauscher geleitet, um die für die Verbrennung erforderliche Frischluft aufzuheizen. Auf diese Weise gelingt es, die in den Prozeßabgasen - auch Rauchgasen genannt - enthaltene Wärmeenergie zumindest partiell wieder dem Schmelzprozeß zuzuführen. Die mit Hilfe des Regenerativsystems erzielbaren Rückgewinnungsraten betragen jedoch im Schnitt nur 60 bis 70 %, bezogen auf den gesamten Energiegehalt der Rauchgase. Der restliche Energieanteil geht dem eigentlichen Schmelzprozeß verloren, da die Rauchgase im allgemeinen nach Passieren der Wärmeaustauscher dem Schmelzprozeß entzogen werden.

Eine weitergehende Nutzung des in den Rauchgasen verbliebenen restlichen Energieanteils im Rahmen des Gesamtprozesses ist beispielsweise aus der Zementindustrie bekannt. Hierbei wird das Zement-Rohmehlgemisch mit den heißen Prozeßabgasen in intensiven Kontakt gebracht und so vor der Einführung in den Drehrohrofen aufgeheizt. Eine entsprechende thermische Vorbehandlung des Komponenten-Gemenges ist jedoch im Falle der Glas-Herstellung mit beträchtlichen Nachteilen verbunden, die eine Übertragung dieses Verfahrensprinzips auf die Gewinnung von Silikatglas im Schmelzprozeß grundsätzlich in Frage stellen beziehungsweise nicht zulassen.

In erster Linie handelt es sich hierbei um die Entmischung des Komponenten-Gemenges im Rauchgasstrom. Für die Herstellung von Silikatglas im Schmelzprozeß ist es nämlich unerläßlich, die Rohstoff-Komponenten vor der Einführung in den Schmelzofen gründlich zu durchmischen, da nur ein homogenes Gemisch beziehungsweise Gemenge der Komponenten ein gleichmäßiges Schmelzverhalten und somit ein entsprechend gleichförmiges Produkt hinsichtlich Zusammensetzung, Verarbeitungseigenschaften und Qualitätsmerkmalen garantiert. Aufgrund der unterschiedlichen Teilchengrößen und Schüttgewichte der Rohstoff-Komponenten führt jedoch die zur Wärmeübertragung erforderliche, intensive Behandlung des homogenen Gemenges mit den heißen Prozeßabgasen zu Entmischungserscheinungen, die sich hinsichtlich des Schmelzverhaltens im nachfolgenden Schmelzprozeß sowie hinsichtlich der Einheitlichkeit des gebildeten Glases äußerst nachteilig auswirken. Ferner führen die in den Rauchgasen üblicherweise enthaltenen Schwefelverbindungen, zum Beispiel $SO_2$ oder $SO_3$, zu unerwünschten Reaktionen mit den Alkalimetall- und Erdalkalimetall-Komponenten des Gemenges, wobei die gebildeten Sulfate in der Glasschmelze verbleiben. Diese Gründe haben bislang in der Praxis dazu geführt, bei der Silikatglas-Herstellung auf eine der Zement-Herstellung entsprechende thermische Vorbehandlung des Komponenten-Gemenges — insbesondere unter Verwendung der Rauchgase. — zu verzichten.

Demgegenüber ist es die Aufgabe der vorliegenden Erfindung, ein Verfahren zur Glas-Herstellung im Schmelzprozeß zu entwickeln, bei dem die Rohstoff-Komponenten zuvor einer thermischen Aufbereitung unterworfen
werden, die vorstehend aufgezeigten Nachteile jedoch
nicht auftreten. Im Hinblick auf die Einsparung an der
dem Schmelzprozeß insgesamt zugeführten Energie betrifft diese Aufgabenstellung insbesondere die Ausnutzung der mit den Prozeßabgasen abgeführten restlichen
Wärmeenergie.

Gegenstand der Erfindung ist somit ein Verfahren zur
Herstellung von Silikatglas aus Siliciumdioxid und geeigneten Metallverbindungen im Schmelzprozeß, bei dem
das Komponenten-Gemenge zuvor einer thermischen Vorbehandlung unterworfen wird, welches dadurch gekennzeichnet ist, daß man

a) eine der Hauptkomponenten des Gemenges unter Ausnutzung der in den Prozeßabgasen enthaltenen Wärmeenergie und/oder durch Zuführung prozeßfremder
   Wärmeenergie erhitzt,

b) diese Komponente mit den übrigen homogen vermischt
   und

c) sodann das erhitzte Gemenge dem Schmelzprozeß zuführt.

Im Sinne der Erfindung ist es mithin von wesentlicher
Bedeutung, vor Einführung der Rohstoff-Komponenten in
den Schmelzofen nur eine der Hauptkomponenten, das
heißt eine derjenigen Komponenten, die mengenmäßig
einen wesentlichen Anteil des Gesamtgemenges ausmachen,
zu erhitzen und diese erst nachfolgend mit den übrigen
homogen zu vermischen. Auf diese Weise wird eine thermische Aufbereitung der Rohstoff-Komponenten vor dem
eigentlichen Schmelzprozeß ermöglicht, bei der ein ho-

/5

mogenes, erhitztes Gemenge der Komponenten resultiert, ohne daß Entmischungserscheinungen sowie die damit verbundenen negativen Folgen für den Schmelzprozeß zu befürchten wären. Die erfindungsgemäße thermische Aufbereitung der Rohstoff-Komponenten bietet gegenüber dem herkömmlichen Verfahren zur Glas-Herstellung insbesondere den Vorteil, daß sich durch die zusätzliche Energiezufuhr die Leistung eines Schmelzofens - bezogen auf die gewonnene Menge an Silikatglas pro Quadratmeter Ofenfläche und Zeiteinheit (Tag) - bei gleichem Energieaufwand für den eigentlichen Schmelzprozeß beträchtlich steigern läßt, zum Beispiel etwa 35 % bei einer Vorwärmtemperatur des Sandes von 500°C. Diese Leistungssteigerung wird insbesondere dadurch hervorgerufen, daß ein beträchtlicher Anteil der insgesamt erforderlichen Energiemenge dem Gemenge bereits außerhalb des Schmelzofens durch die vorgewärmte Gemengekomponente zugeführt wird, so daß die Verweilzeit im Ofenaggregat, die für die Erwärmung des Gemenges von circa 20°C bis zur gewünschten Vorwärmtemperatur aufzubringen wäre, entfällt.

Das Erhitzen der einen Rohstoff-Komponente kann in technisch einfacher Weise mit Hilfe gebräuchlicher Wärmeaustauscher erfolgen. Hierzu kommen zum Beispiel Fallrohre, Drehtrommeln oder Zyklone in Frage, in denen das zu erhitzende Gut vorzugsweise im Gegenstrom mit einem Heißgasstrom behandelt wird. Ein für das erfindungsgemäße Verfahren besonders geeigneter Gegenstrom-Wärmeaustauscher besteht beispielsweise aus einem vertikal angeordneten zylindrischen Rohr, das durch düsenartige Verengungen in mehrere Kammern unterteilt ist. Die Rohstoff-Komponente wird in feinverteilter Form am oberen Ende in den Wärmeaustauscher eingespeist, wobei ihr vom unteren Ende des Wärmeaustauschers ein heißer Gasstrom entgegenströmt. Beim Passieren der düsenartigen Verengungen werden die einzelnen Partikel der Rohstoff-Komponente infolge der erhöhten Geschwindigkeit des Gasstromes kurzzeitig in der Schwebe gehalten, bis sie aufgrund der Anreicherung wolkenartig in die nächst tiefer gelegene Kammer hinabfallen. Dieser Vorgang wiederholt sich kontinuierlich bei einer jeden dieser Rohrverengungen, wobei ein äußerst intensiver Wärmeaustausch zwischen dem heißen Gastrom einerseits und der zu erwärmenden Rohstoff-Komponente andererseits stattfindet. Zur Durchführung des erfindungsgemäßen Verfahrens können jedoch darüber hinaus auch generell andersartig konstruierte Wärmeaustauscher Verwendung finden, die einen intensiven Wärmeaustausch gewährleisten.

Zum Erhitzen der einen Rohstoff-Komponente läßt sich erfindungsgemäß sowohl die in den Prozeßabgasen enthaltene Wärmeenergie ausnutzen als auch prozeßfremde Wärmeenergie einsetzen. Im ersteren Falle wird das prozeßeigene Rauchgas als heißer Gasstrom in den Wärmeaustauscher geleitet, im zweiten Falle dient hierzu prozeßfremde Heißluft, beispielsweise ein durch zusätzliche Brenner erzeugter Heißluftstrom oder auch heiße – gegenüber den Rohstoff-Komponenten inerte – Abluft aus anderen Prozessen. Im Interesse einer für das Verfahren optimalen Temperaturführung kann es gegebenenfalls von Vorteil sein, den prozeßeigenen Rauchgasstrom mit einem prozeßfremden Heißluftstrom entsprechend zu vermischen. Im Hinblick auf eine Ausnutzung der mit den Abgasen des Schmelzprozesses abgeführten Wärmeenergie werden für das erfindungsgemäße Verfahren bevorzugt die prozeßeigenen Rauchgase verwendet. In diesem Falle wird vorzugsweise die Siliciumdioxid-Komponente der thermischen Aufbereitung in Stufe a) des Verfahrens unterworfen.

Das anschließende Vermischen der auf diese Weise erhitzten Rohstoff-Komponente mit den übrigen, die üblicherweise Umgebungstemperatur aufweisen, läßt sich
mit Hilfe geeigneter, für einen solchen Zweck gebräuchlicher Mischaggregate, beispielsweise einer Mischschnecke, durchführen. Aufgrund des bei dem intensiven
Vermischen erfolgenden Wärmeaustausches zwischen den
Komponenten resultiert erfindungsgemäß ein heißes,
homogenes Gemenge der Rohstoff-Komponenten, das sodann dem eigentlichen - in herkömmlicher Art und
Weise verlaufenden - Schmelzprozeß zugeführt wird.

Zur Erzeugung eines homogenen Gemenges der Rohstoff-
Komponenten ist es weiterhin von Vorteil, bei der erfindungsgemäßen thermischen Aufbereitung oder Vorbehandlung ein Schmelzen der mengenmäßig wesentlichen
Alkalimetall- beziehungsweise Erdalkalimetall-Komponente zu vermeiden, um ein Zusammenbacken oder Verklumpen dieser Komponenten und damit verbundene Inhomogenitäten des Gemenges zu verhindern. Demzufolge ist
es erfindungsgemäß bevorzugt, in Stufe a) eine der
Komponenten des Gemenges bis zu einer Temperatur zu
erhitzen, die zu einer Mischtemperatur des in Stufe b)
resultierenden Gemenges führt, welche unterhalb der
Schmelztemperatur der mengenmäßig wesentlichen Alkalimetall- und Erdalkalimetallkomponente liegt.

Als Rohstoff-Komponenten für das erfindungsgemäße
Verfahren kommen generell die zur Herstellung von
Silikatglas im Schmelzprozeß gebräuchlichen Grundstoffe in Frage, beispielsweise neben Quarzsand die
vorstehend angeführten Alkalimetall- und Erdalkalimetallverbindungen sowie die üblichen Zusätze. Zur
Durchführung des Verfahrens kann prinzipiell jede der mengenmäßigen Hauptkomponenten - bezogen auf das Gesamtgemenge - vor dem Vermischen mit den übrigen erhitzt werden. Im Sinne der Erfindung ist es jedoch bevorzugt, daß man in Stufe a) den Sand unter Ausnutzung der in den Prozeßabgasen enthaltenen Wärmeenergie erhitzt, wobei diese Abgase vorzugsweise vorher durch Wärmeaustauscher geleitet werden.

So wird beispielsweise das aus dem Schmelzofen mit einer Temperatur von circa 1400$^o$C entweichende Rauchgas in Wärmeaustauschern auf etwa 500$^o$C abgekühlt und nachfolgend in einem geeigneten Gegenstrom-Wärmeaustauscher mit dem Sand in engen Kontakt gebracht. Der hierbei auf eine Temperatur von etwa 400$^o$C erhitzte Sand wird anschließend mit den übrigen Komponenten homogen vermischt und das resultierende Gemenge, das eine Temperatur von circa 300$^o$C aufweist, dem Schmelzofen zugeführt. Gegebenenfalls können die Rauchgase auch direkt zum Erhitzen des Sandes eingesetzt und - falls erwünscht - erst nachfolgend durch Wärmeaustauscher zum Vorwärmen der Verbrennungsluft geleitet werden. Ferner ist es möglich, dem Sand zusätzlich durch prozeßfremde Energie auf ein noch höheres Temperaturniveau aufzuheizen.

Ein Vorteil dieser bevorzugten Verfahrensweise ist insbesondere darin zu sehen, daß hierbei die prozeßeigenen Rauchgase zum Erhitzen des Sandes Verwendung finden können, ohne daß die vorstehend erwähnten Nachteile einer Absorption der in den Rauchgasen enthaltenen Schwefelverbindungen auftreten. Eine Anreicherung von Schwefelverbindungen in der Glasschmelze wird somit auch beim Einsatz schwefelhaltiger Brennstoffe vermieden. Hinzu kommt, daß die mit den Rauchgasen aus dem Schmelzofen ausgetragenen heißen Feststoffanteile zu einem großen Teil vom Sand adsorbiert werden und auf diese Weise wieder in den Ofen zurückgelangen. Das erfindungsgemäße Verfahren trägt somit auch zu einer Reinigung des Abgasstromes bei.

Der entscheidende Vorteil einer Verwendung der Rauchgase zum Erhitzen des Sandes liegt in einer Senkung des spezifischen Wärmeverbrauches für den Schmelzprozeß, die bei einer Vorwärmtemperatur von beispielsweise 400°C etwa 25 % - bezogen auf kJ pro kg Silikatglas - betragen kann. Dies führt unmittelbar zu Einsparungen der für den Schmelzprozeß erforderlichen Menge an Primärenergieträgern, beispielsweise schwerem Heizöl, die in diesem Falle gleichfalls 25 % der üblicherweise erforderlichen Menge erreichen können; bei gleichbleibendem Primärenergieeinsatz resultiert jedoch eine entsprechende Steigerung der Schmelzleistung der Ofenanlage.

In dem nachstehenden Beispiel wird die Durchführung des erfindungsgemäßen Verfahrens hinsichtlich der Steigerung der Schmelzleistung näher erläutert.

## Beispiel

Zur Herstellung von Silikatglas im Schmelzprozeß werden als Rohstoffkomponenten Sand, Soda und Kalkstein im Verhältnis 18,7 : 17,7 : 63,6 eingesetzt. Eine thermische Vorbehandlung des Sandes erfolgt mit Hilfe eines Gegenstromwärmeaustauschers, wobei der Sand von 20°C auf 520°C aufgeheizt wird. Anschließend wird der erwärmte Sand mit Hilfe einer Mischschnecke mit den übrigen Komponenten - die Umgebungstemperatur aufweisen - vermischt, wobei ein homogenes Gemenge mit einer Temperatur von 360°C resultiert. Dieses vorgewärmte Gemenge wird einem mit Erdgas beheiztem Ofen, der eine Schmelzfläche von 1 m² aufweist, über eine Förderschnecke kontinuierlich zugeführt. Ebenfalls kontinuierlich wird die fertige Glasschmelze in der üblichen Weise über einen Überlauf aus dem Ofen ausgetragen. Die Schmelzleistung bei Einsatz des vorgewärmten Gemenges liegt um 34 % höher als bei Einsatz eines thermisch nicht vorbehandelten Gemenges mit circa 20°C.

DIPL.-ING. HORST RÖSE    DIPL.-ING. PETER KOSEL
PATENTANWÄLTE

Unsere Akten-Nr.: 954/153EP    Bad Gandersheim, 25. März 1981
1 HERMANN HEYE

0037084

P A T E N T A N S P R Ü C H E

1. Verfahren zur Herstellung von Silikatglas aus Siliciumdioxid und geeigneten Metallverbindungen im Schmelzprozeß, bei dem das Komponenten-Gemenge zuvor einer thermischen Vorbehandlung unterworfen wird, dadurch gekennzeichnet, daß man

a) eine der Hauptkomponenten des Gemenges unter Ausnutzung der in den Prozeßabgasen enthaltenen Wärmeenergie und/oder durch Zuführung prozeßfremder Wärmeenergie erhitzt,

b) diese Komponente mit den übrigen homogen vermischt und

c) sodann das erhitzte Gemenge dem Schmelzprozeß zuführt.

2. Verfahren nach Anspruch 1, dadurch gekennzeichnet, daß man in Stufe a) eine der Komponenten des Gemenges bis zu einer Temperatur erhitzt, die zu einer Mischtemperatur des in Stufe b) resultierenden Gemenges führt, welche unterhalb der Schmelztemperatur der mengenmäßig wesentlichen Alkalimetall- und Erdalkalimetall-Komponente liegt.

3. Verfahren nach Anspruch 1 und 2, dadurch gekennzeichnet, daß man in Stufe a) Sand unter Ausnutzung der in den Prozeßabgasen enthaltenen Wärmeenergie erhitzt, wobei diese Abgase vorzugsweise vorher durch Wärmeaustauscher geleitet werden.

## 0037084

Europäisches
Patentamt

**EUROPÄISCHER RECHERCHENBERICHT**

EP 81 10 2289

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 325 891 (CENTRAL GLASS)<br>* Patentansprüche 1,4; Seite 4, Zeilen 28-37 *<br><br>-- | 1,2,3 |
| X | FR - A - 1 469 109 (COMPAGNIE DE SAINT-GOBAIN)<br>* Seite 2, Zeilen 30-36, 73-78, 106-110 *<br><br>-- | 1,2 |
| X | FR - A - 2 231 629 (PELLTEC)<br>* Seite 5, Zeilen 14-19 *<br><br>-- | 1,3 |
| X | FR - A - 2 117 865 (ASAHI GLASS)<br>* Patentanspruch 1; Seite 4, Zeilen 23-33; Figur 1 *<br><br>-- | 1,2,3 |
| X | FR - A - 2 416 201 (UNION CARBIDE CORPORATION)<br>* Figur 1; Seite 10, Zeile 30 - Seite 11, Zeile 37; Patentanspruch 1 *<br><br>---- | 1,3 |

**KLASSIFIKATION DER ANMELDUNG (Int Cl³)**

C 03 B 5/235

**RECHERCHIERTE SACHGEBIETE (Int Cl³)**

C 03 B 5/00
C 03 C 1/00

**KATEGORIE DER GENANNTEN DOKUMENTE**

X: von besonderer Bedeutung

A: technologischer Hintergrund

O: nichtschriftliche Offenbarung

P: Zwischenliteratur

T  der Erfindung zugrunde liegende Theorien oder Grundsätze

E: kollidierende Anmeldung

D  in der Anmeldung angeführtes Dokument

L  aus andern Gründen angeführtes Dokument

&  Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 23-06-1981 | BOUTRUCHE |

EPA form 1503 1   06.78